# DEMANDE DE BREVET EUROPEEN

(11) **EP 2 164 015 A1**
(43) Date de publication de la demande: **17.03.2010**
(21) Numéro de dépôt: 08300263.4
(22) Date de dépôt: 03.09.2008
(51) Int. Cl.: G06F 21/00, G06Q 30/00

(54) **Procédé de transmission d'informations à accusé de réception sématique**

(71) Demandeur: Placin, Frédéric, 64140 Lons (FR)
(72) Inventeur: Placin, Frédéric, 64140, LONS (FR)
(74) Mandataire: Maupilier, Didier

(57) **Abrégé**

Le procédé de transmission d'informations entre un émetteur et un récepteur, comporte :
- une phase d'authentification du récepteur utilisant une paire de clés de cryptage de type clé privée / clé publique,
- une phase d'envoi d'une série d'informations de l'émetteur vers le récepteur,
- une phase de retransmission par le récepteur vers l'émetteur d'un accusé de réception comportant au moins un élément sémantiquement associé à la série d'informations transmises.

## Description

L'invention relève du domaine général des procédés de transmission d'informations. Plus particulièrement, elle a trait à un procédé d'émission d'informations sur un réseau, de façon à garantir leur bonne réception et à certifier l'identité du récepteur de ces informations. Encore plus particulièrement, elle concerne un procédé interactif de diffusion de messages publicitaires via Internet moyennant rémunération automatique périodique de l'utilisateur internaute qui accepte de recevoir les messages publicitaires.

Lorsque on souhaite obtenir la confirmation par un internaute de la bonne réception d'un ensemble d'informations, typiquement la bonne réception d'une page Internet, se posent les problèmes d'envoi par l'internaute d'un accusé de réception du message, et d'authentification que l'internaute qui envoie l'accusé de réception est bien celui qui doit recevoir l'information.

En ce qui concerne la confirmation de réception d'une page Internet, on utilise déjà de façon courante dans le domaine des formulaires sur Internet une validation d'inscription par recopie d'un cryptogramme visuel composé de mots ou de lettres et chiffres, envoyé sous forme de fichier image. Cette technique est utilisée pour tenter d'éviter une inscription ou une réponse automatique par des logiciels. Un humain peut comprendre dans une image une suite de lettres ou de chiffres présents et la re-saisir au clavier. Un logiciel de réponse automatique à ce genre de confirmation d'inscription devrait disposer de reconnaissance de caractères dans une image, ce qui en augmenterait la complexité.

Vis à vis de l'authentification de l'internaute qui reçoit une série d'informations, on connaît dans le domaine des sites bancaires accessibles par Internet une authentification de l'internaute avant de lui donner accès à ses comptes, par frappe d'un code confidentiel propre à chaque utilisateur. Cette méthode présente l'inconvénient d'une éventuelle interception de la série de touches frappées, et donc de la perte de secret du code confidentiel. La solution couramment adoptée est de présenter au client internaute un clavier sous forme de pavé numérique, dont les chiffres sont répartis au hasard sur une matrice 4 x 4. L'internaute n'a plus alors qu'a déplacer le pointeur de la souris de son ordinateur sur les chiffres formant son code confidentiel, ce qui empêche l'interception d'une série de frappes clavier.

Cette solution présente l'inconvénient de la lenteur, l'authentification prenant une dizaine de secondes à l'internaute.

Par ailleurs, cette authentification est alors purement syntaxique, et non reliée au contenu des informations transmises.

Un procédé d'émission d'information pour lequel on souhaiterait garantir la bonne réception des informations transmises et l'identité du récepteur devrait alors utiliser à la fois un test de réception, et un test d'identification. On comprend que cette contrainte rendrait pénible, voire irréaliste l'envoi successif de plusieurs séries d'informations.

Vis à vis du cas particulier de l'émission de messages publicitaires sur Internet, éventuellement ciblés selon les internautes, les systèmes de diffusion actuels se révèlent très insatisfaisants dans la mesure où tous les ordinateurs ou téléphones portables sont équipés de systèmes de protection qui bloquent ces messages et empêchent donc leur visualisation par l'utilisateur.

Les méthodes et procédés actuels de diffusion de messages publicitaires sont des procédés passifs, subis par les internautes qui font tout pour se protéger contre l'invasion de messages publicitaires en installant des logiciels qui « bloquent » ces messages et empêchent donc leur visionnage par l'utilisateur. Donc, en l'état actuel des techniques, les sociétés qui souhaitent diffuser un message publicitaire sur Internet paient très cher sans avoir l'assurance que leur message sera visionné par les utilisateurs internautes. Aucun procédé existant ne permet de solutionner ce problème technique auquel les diffuseurs de messages publicitaires sont confrontés.

La présente invention a donc pour objet de remédier à ces inconvénients en permettant de garantir à la fois une bonne réception d'informations transmises et l'authentification du récepteur, le tout dans un temps très court.

Un second but de l'invention est de permettre une vérification de l'intelligibilité des informations transmises.

Un autre but est de garantir la bonne réception et l'authentification de façon très simple pour l'utilisateur.

La présente invention a également pour objet l'implantation automatique de messages publicitaires dans la page d'accueil Internet de l'ordinateur ou de tout autre système connectable à Internet de l'utilisateur internaute, et la rémunération automatique de l'utilisateur après visionnage confirmé de ces messages.

Selon l'invention, le procédé de transmission d'un ou plusieurs messages publicitaires par un serveur de fichiers vers un ordinateur d'un utilisateur internaute, lesdits messages publicitaires étant formatés au sein d'une page Internet, lesdits messages publicitaires étant associés à des évaluations selon n dimensions perceptives, ces évaluations étant stockées dans une mémoire du serveur, comporte :
- une étape de création de compte dans laquelle :
   - l'utilisateur définit ses coordonnées et ses préférences selon les n dimensions perceptives,
   - un couple de clés de cryptage de type clés publique et privée est généré, la clé publique étant stockée dans une mémoire de l'ordinateur de l'utilisateur conjointement à un identifiant unique crypté avec la clé privée, et la clé privée étant stockée dans une mémoire du serveur conjointement à l'identifiant unique,
- une étape d'utilisation dite quotidienne du service dans laquelle :
   - l'ordinateur de l'utilisateur se connecte via Internet au serveur du service et lui adresse son identifiant unique crypté et sa clé publique,
   - le serveur décrypte l'identifiant unique avec la clé publique, puis récupère dans sa mémoire la clé privée associée à cet identifiant unique et teste la correspondance des deux clés,
   - le serveur sélectionne un ou plusieurs messages publicitaires par proximité aux préférences perceptives de l'utilisateur, puis génère une page Internet comportant ce ou ces messages publicitaires, ainsi qu'un cryptogramme visuel, et l'adresse à l'utilisateur,
   - l'utilisateur re-transcrit le contenu du cryptogramme visuel, puis le serveur confirme la correspondance correcte du contenu retranscrit et du contenu originel et stocke en mémoire la visualisation correcte de ce ou ces messages publicitaires par cet utilisateur à la date du jour.

Dans une mise en oeuvre avantageuse, le contenu du cryptogramme visuel est sémantiquement associé aux messages publicitaires sélectionnés.

On comprend que par cette disposition, il est possible de vérifier que l'internaute à réellement pris connaissance du message publicitaire qui lui a été adressé, et n'a pas simplement retranscrit le cryptogramme visuel de façon quasi réflexe.

L'invention vise plus généralement un procédé de transmission d'informations entre un émetteur et un récepteur, comportant :
- une phase d'authentification du récepteur utilisant une paire de clés de cryptage de type clé privée / clé publique,
- une phase d'envoi d'une série d'informations de l'émetteur vers le récepteur,
- une phase de retransmission par le récepteur vers l'émetteur d'un accusé de réception comportant au moins un élément sémantiquement associé à la série d'informations transmises.

Selon un mode de mise en oeuvre particulier, l'émetteur est un serveur de fichiers numérisés.

Selon un mode de mise en oeuvre préféré, l'élément sémantiquement associé à la série d'informations transmises est un texte transmis par l'émetteur sous forme d'image, c'est à dire classiquement un cryptogramme visuel.

Dans une autre mise en oeuvre, l'élément sémantiquement associé à la série d'informations transmises est une réponse à une question transmise avec la série d'informations, la réponse étant contenue dans la série d'informations transmises.

Dans une variante avantageuse, cet élément sémantique est codé par un code propre au récepteur avant sa retransmission.

Dans une mise en oeuvre préférée, le récepteur est de type ordinateur doté de moyens de visualisation de pages Internet, et la phase d'envoi de la série d'informations utilise un protocole de transmission de type Internet, la série d'informations étant formatée en pages Internet.

Dans le cas particulier d'authentification par couple clé publique / clé privée et de transmission d'informations sous forme de pages Internet, la clé publique est avantageusement stockée dans une mémoire de l'ordinateur récepteur, et la clé privée est stockée dans une mémoire du serveur de fichiers.

Dans un mode préféré de mise en oeuvre, le procédé comporte une phase de mémorisation par l'émetteur des informations transmises à chaque récepteur.

Préférentiellement, l'émetteur comporte alors une mémoire dans laquelle est stockée une table associant une valeur à chaque série d'informations transmises, et une mémoire associée à chaque récepteur, dans laquelle est stockée la liste des séries d'informations transmises audit récepteur, la date de transmission de chacune de ces séries d'informations, la somme des valeurs associées aux séries d'informations transmises à ce récepteur depuis une date de début de sommation, et la date de début de sommation.

Plus particulièrement, l'émetteur comporte une mémoire dans laquelle est stockée un ensemble de données caractéristiques du récepteur, et une mémoire dans laquelle est stockée, pour chaque série d'informations susceptibles d'être transmises, un ensemble de données caractéristiques de cette série.

Encore plus particulièrement, le procédé comporte une phase de sélection d'au moins une série d'informations à transmettre au récepteur selon des critères associant les données caractéristiques du récepteur, les données caractéristiques des séries d'informations susceptibles d'être transmises, et la liste des séries d'informations précédemment transmises audit récepteur.

Selon un mode avantageux, le procédé comporte une phase d'actualisation des données caractéristiques du récepteur.

Dans ce cas, plus spécifiquement, l'actualisation utilise une valorisation par le récepteur de chaque série d'informations reçues, et une mémorisation par l'émetteur des valorisations associées aux séries d'informations transmises audit récepteur.

Avantageusement, dans le cas de transmission d'informations sous forme de pages Internet, l'ordinateur récepteur comporte une mémoire dans laquelle sont stockées des informations aptes à provoquer la mise en relation prioritaire avec l'émetteur lors de l'accès du récepteur au réseau Internet.

On comprend que l'ordinateur de l'utilisateur se connecte tout d'abord au serveur de fichiers, de manière à permettre l'envoi d'une ou plusieurs séries d'informations choisies avant l'accès classique aux autres serveurs de données Internet.

La description et les dessins d'un mode particulier de réalisation de l'invention, dans le cas particulier de transmission de pages Internet entre un serveur et un ordinateur récepteur, donnés ci-après, permettront de mieux comprendre les buts et avantages de l'invention. Il est clair que cette description est donnée à titre d'exemple, et n'a pas de caractère limitatif. Dans les dessins :
- la figure 1 est une représentation schématique des éléments impliqués dans une connexion Internet, dans le cas du procédé selon l'invention ;
- la figure 2 illustre sous forme d'organigramme les étapes de la phase d'initialisation du procédé ;
- la figure 3 illustre de la même manière le procédé d'utilisation quotidienne du procédé;
- la figure 4 illustre de la même manière le procédé de relevé régulier de paramètres du compte utilisateur ;
- la figure 5 illustre de même le procédé de modification de données utilisateur.

Dans le suite de la description, l'émetteur de données est constitué d'un ou plusieurs serveurs de fichiers, ces fichiers se présentant sous la forme de pages html, adaptées à être visualisées par un navigateur Internet de type courant, par exemple Mozilla Firefox ou Internet Explorer. De même, le récepteur de données est ici un internaute doté d'un dispositif d'accès au réseau Internet, par exemple un micro-ordinateur de type dit PC, ou tout autre dispositif de visualisation de pages Internet connu en soi, tel que téléphone mobile etc. La connexion entre le serveur et l'internaute est réalisée par exemple par réseau filaire sous un protocole ADSL, mais tout autre mode de connexion et de transfert de données est également compatible avec le procédé selon l'invention sans modifications.

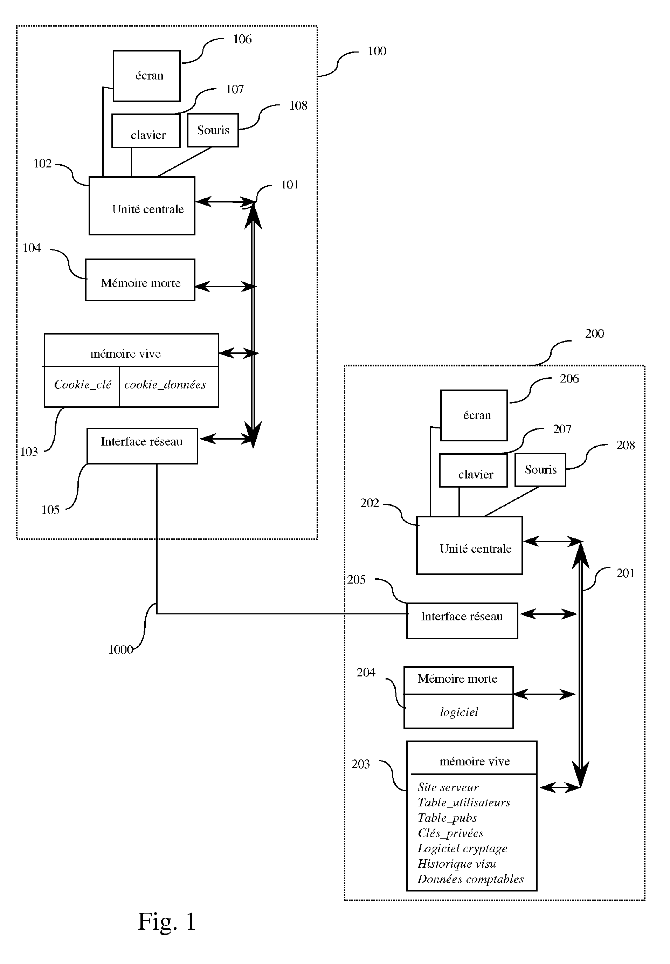

Tel qu'on peut le voir sur la figure 1 sous forme de schéma synoptique, dans une connexion Internet de type courant, ce qui est désigné dans la description comme le récepteur est ici un dispositif d'accès à Internet, par exemple micro-ordinateur, représenté sous référence générale 100, et utilisé par un internaute 1, ledit dispositif comportant, reliés entre eux par un bus d'adresses et de données 101 :
- une unité centrale 102 ;
- une mémoire vive RAM 103 ;
- une mémoire morte 104;
- une interface réseau 105 servant à recevoir, sous forme de données binaires, des séries d'informations, cette interface étant par exemple un modem ADSL classique ;
et, indépendamment du bus 101 :
- un écran de visualisation 106 ;
- un clavier 107 ;
- une souris 108.

La mémoire vive 103 conserve des données, des variables et des résultats intermédiaires de traitement, dans des registres mémoire portant, dans la suite de la description, les mêmes noms que les données dont ils conservent les valeurs. La mémoire vive 103 comporte notamment :
- un fichier " cookie_clé " dans lequel est conservée une clé de cryptage,
- un fichier " cookie_données " dans lequel sont conservées des données spécifiques à l'utilisateur,
- un registre "adresse_serveur", dans lequel est conservée l'adresse d'un serveur Internet lancé en priorité lors de toute connexion au réseau Internet.

La mémoire vive 103 constitue un moyen de stockage d'information lisible par un ordinateur ou un microprocesseur. Elle conserve, entre autres, des données résultant de la mise en oeuvre de ce procédé.

De la même manière, ce qui est désigné dans la description comme l'émetteur est ici un serveur de fichiers, représenté sous référence générale 200, ledit serveur 200 comportant, reliés entre eux par un bus d'adresses et de données de serveur 201 :
- une unité centrale de serveur 202 ;
- une mémoire vive de serveur RAM 203 ;
- une mémoire morte de serveur ROM 204 ;
- une interface réseau de serveur 205 servant à émettre et recevoir, sous forme de données binaires, des séries d'informations ;

Ce serveur peut être relié à un écran de visualisation 206, un clavier 207, une souris 208 pour la mise à jour de certaines des données ou logiciels stockés dans la mémoire vive 203.

La mémoire vive 203 conserve des données, des variables et des résultats intermédiaires de traitement, dans des registres de mémoire portant, dans la suite de la description, les mêmes noms que les données dont ils conservent les valeurs. La mémoire vive 203 comporte notamment :
- une ou plusieurs pages Internet en langage html ou autre, formant ensemble un site Internet de présentation du service proposé et d'interface utilisateur, ce site étant nommé dans la suite de la description site serveur,
- une table " table_utilisateurs " dans laquelle est conservée un tableau de données relatives aux utilisateurs du procédé selon l'invention, et entre autres pour chaque utilisateur des données de préférences de l'utilisateur
- une table "table_pubs", dans laquelle est conservée un tableau de données relatives aux séries d'informations à émettre, par exemple des bandeaux publicitaires, blocs de texte ou animations diverses : flux vidéo ou audio, bons de réduction, invitations, codes promotionnels etc, et entre autres pour chaque série des données de classification selon divers axes perceptifs, et des adresses de fichiers images, audio, video, texte ou de pages Internet associés à chaque série d'information, selon divers critères perceptifs, et une page d'accueil Internet préférée,
- une table " clés_privées " dans laquelle est conservée, pour chaque utilisateur identifié par son identifiant unique IdClient, une clé de cryptage spécifique,
- un programme "logiciel_cryptage" de cryptage / décryptage de données à l'aide de la paire de clés associée à chaque utilisateur, ce logiciel utilisant un algorithme de type classique, par exemple RSA,
- une table "historique_visualisation", dans laquelle est stockée un tableau de toutes les séries d'informations vues par chaque utilisateur avec les dates et heures de visualisation,
- une base "données_comptables", dans lequel sont stockées pour chaque utilisateur des dates et des valeurs, et
- un programme informatique de mise en oeuvre du procédé selon l'invention.

La mémoire vive 203 constitue un moyen de stockage d'information lisible par un ordinateur ou un microprocesseur. Elle conserve des données résultant de la mise en oeuvre de ce procédé, c'est-à-dire des données codées.

Selon une variante, la mémoire vive 203 est amovible, partiellement ou totalement.

La mémoire morte 204 constitue un moyen de stockage d'information lisible par un ordinateur ou un microprocesseur. Elle conserve des instructions d'un programme informatique qui permet la mise en oeuvre du procédé objet de l'invention pour la partie qui concerne le serveur 200.

Selon une variante, la mémoire morte 204 est amovible, partiellement ou totalement, et comporte, par exemple un disque optique numérique à mémoire figée ("CD-ROM" en anglais).

Le serveur 200 et l'ordinateur 100 de l'internaute 1 sont reliés par un réseau 1000 de type classique, apte à supporter le transfert de documents de type Internet.

Chacun des éléments illustrés en figure 1 est bien connu de l'homme du métier des systèmes de transmission de données informatiques et, plus généralement, des systèmes de traitement de l'information. Ces éléments ne sont donc pas décrits ici.

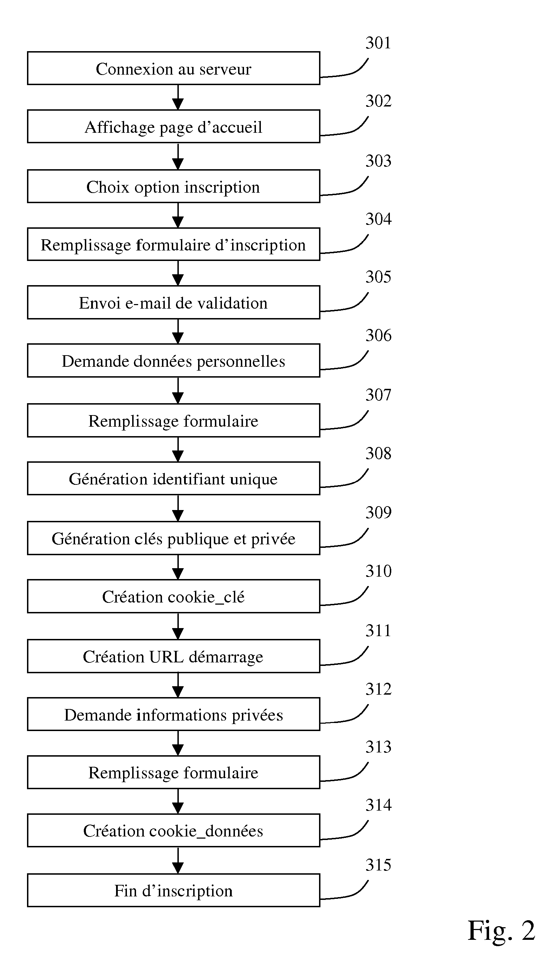

L'unité centrale 102 chez l'internaute et le serveur 202 sont adaptés à mettre en oeuvre l'organigramme décrit en figures 2, 3, 4.

La figure 2 schématise la première étape du procédé objet de l'invention, c'est à dire l'initialisation du dispositif illustré en figure 1.

Le serveur 200 héberge un site Internet dit site serveur, accessible à tout internaute. Ce site Internet est réalisé en utilisant des techniques classiques connues de l'homme du métier.

Au cours d'une étape préliminaire 300, une base de données "table_pubs" de séries d'informations, ici des bandeaux publicitaires, blocs de texte ou animations diverses, par exemple flux vidéo ou audio, bons de réduction, invitations, codes promotionnels etc, est entrée dans le serveur 200, comportant un identifiant unique IdPub pour chaque série d'informations, un ensemble de caractéristiques perceptives de ces séries d'informations selon n critères Ci (1 <i<n) préalablement choisis, ainsi que les adresses mémoires ou URL des fichiers images, audio, vidéo, texte ou pages Internet correspondant à ces séries d'informations.

Au cours d'une opération 301, l'utilisateur internaute 1 se connecte volontairement au site serveur hébergé par le serveur 200, par exemple par entrée directe de l'adresse Internet dudit site dans la barre d'adresse de son ordinateur 100, de type http://www.site_serveur.com.

Au cours d'une opération 302, le site serveur affiche, sur l'écran 106 de l'utilisateur 1, une page d'accueil Pₐ et d'information sur le fonctionnement du programme de rémunération de l'utilisateur en contrepartie du visionnage par cet utilisateur de messages publicitaires.

Au cours d'une opération 303, l'utilisateur internaute 1 clique avec la souris 108 de son ordinateur 100 sur un icône d'inscription disposée sur la page d'accueil Pₐ du site serveur, et est redirigé vers une page d'inscription Pi au programme précité. Cette page est de type sécurisé, par exemple par utilisation de protocole de transfert de page https.

Au cours d'une opération 304, la page d'inscription Pᵢ apparaît sur l'ordinateur 100 de l'utilisateur 1. Elle comporte un formulaire de pré-inscription, ainsi qu'un cryptogramme visuel de confirmation de demande, de type connu de l'homme de l'art, comportant par exemple une image sur laquelle on peut distinguer une série de lettres et de chiffres déformés et inclinés. L'utilisateur 1 est invité à inscrire son adresse e-mail sur le formulaire et à retranscrire dans un champ prévu à cet effet la série de lettre et de chiffres qu'il a lues sur le cryptogramme visuel, pour confirmer sa volonté de s'inscrire. Il doit ensuite valider le formulaire de pré-inscription en cliquant sur un icône de validation du formulaire.

Au cours d'une opération 305, le serveur 200 envoie, à l'adresse électronique indiquée par l'utilisateur 1, un e-mail contenant un lien d'identification unique. La création de tels liens uniques est de type classique pour les sites de e-commerce. L'utilisateur 1 clique sur le lien d'identification unique figurant dans l'e-mail qui lui a été adressé par le serveur 200 et le navigateur Internet de son ordinateur 100 est redirigé vers une page de données personnelles P_{dp} du site serveur, contenant le formulaire d'inscription au programme de paiement de l'utilisateur en contrepartie du visionnage par l'utilisateur 1 de messages publicitaires. Cette page P_{dp} est également de type sécurisé, par exemple par utilisation d'un protocole de transfert de type https.

Au cours d'une opération 306, la page de données personnelles P_{dp} qui s'affiche sur l'ordinateur 100 de l'utilisateur 1 invite ce dernier à fournir des données personnelles de base dont notamment :
○ L'adresse URLd de la page d'accueil Internet par défaut actuelle de l'utilisateur 1 (la page par défaut du navigateur Internet est celle qui est affichée au lancement du navigateur) ;
○ Son code postal ;
○ Sa date de naissance ;
○ Ses centres d'intérêts privés et professionnels, déterminés par exemple par une série de n questions Qi (1 <i<n) fermées sous forme de listes de cases à cocher. Dans cet exemple, chaque question Qi correspond à un critère perceptif Ci de caractérisation des séries d'informations référencées dans la table "table_pub".

Au cours d'une opération 307, l'utilisateur 1 remplit le formulaire de la page de données personnelles Pp qu'il valide ensuite en cliquant sur un icône de validation figurant sur ledit formulaire.

Au cours d'une opération 308, le serveur 200 génère un identifiant unique IdClient pour l'utilisateur 1.

Au cours d'une opération 309, le serveur 200 génère également une paire de clés de cryptage (une clé privée et une clé publique) destinées à l'utilisation connue d'algorithme à clé publique. La création de telles paires de clés de cryptage est connue de l'homme de l'art (par exemple protocole SSH) et n'est pas décrite ici. La clé privée de l'utilisateur 1 est enregistrée dans la base de données du serveur 200 dans une table " clés_privées ". Le serveur 200 enregistre l'identifiant unique IdClient de l'utilisateur 1 et les données personnelles de l'utilisateur 1 dans une table " table_utilisateurs " d'une base de données de travail, ces informations étant cryptées en utilisant la clé publique de l'utilisateur 1.

Au cours d'une opération 310, en réponse au formulaire reçu de l'utilisateur 1 comportant ses données personnelles, le serveur 200 envoie au navigateur de l'utilisateur 1 une instruction de création de « cookie ». Ce fichier « cookie », dont la création est de type connue de l'homme de l'art, est déposé dans un registre mémoire " cookie_clé " de l'ordinateur 100 de l'utilisateur 1. Il contient la clé publique de l'utilisateur et l'identifiant unique IdClient de l'utilisateur (données d'identification de l'utilisateur) crypté par le serveur 200 à l'aide de la clé privée et d'un logiciel de cryptage utilisant un algorithme de cryptage à deux clés de type classique, par exemple RSA.

Au cours d'une opération 311, le serveur 200 définit une adresse URLip de page de démarrage Internet personnalisée P_{dip} pour l'utilisateur 1, cette adresse URLip envoyée à l'ordinateur 100 de l'utilisateur 1 et mémorisée de façon classique dans le navigateur de l'utilisateur comme page de démarrage nouvelle dudit navigateur.

Au cours d'une opération 312, le serveur 200 adresse au navigateur de l'utilisateur 1 une page dite page d'informations privées Pᵢₚ comportant un formulaire interactif de demande d'informations privées, cette page étant également de type sécurisé. Ce formulaire invite l'utilisateur à fournir des données privées dont notamment :
○ Nom ;
○ Prénoms ;
○ Adresse postale ;
○ Coordonnées bancaires.

Au cours d'une opération 313, l'utilisateur 1 remplit le formulaire et le valide en cliquant sur un icône cible de validation du formulaire.

Les données privées contenues dans le formulaire sont, éventuellement mais non nécessairement, encryptées par le serveur 200 en utilisant la clé privée de l'utilisateur 1, puis sont re-adressées au navigateur Internet de l'ordinateur 100 de l'utilisateur 1 lors d'une opération 314 sous la forme d'un cookie (le serveur 200 adresse au navigateur Internet de l'ordinateur de l'utilisateur 100 une instruction de création de « cookie » contenant les données personnelles du formulaire), stocké dans un fichier " cookie_données ".

Au cours d'une opération 315, le serveur 200 affiche une page P_{ci} de confirmation d'inscription à l'utilisateur 1.

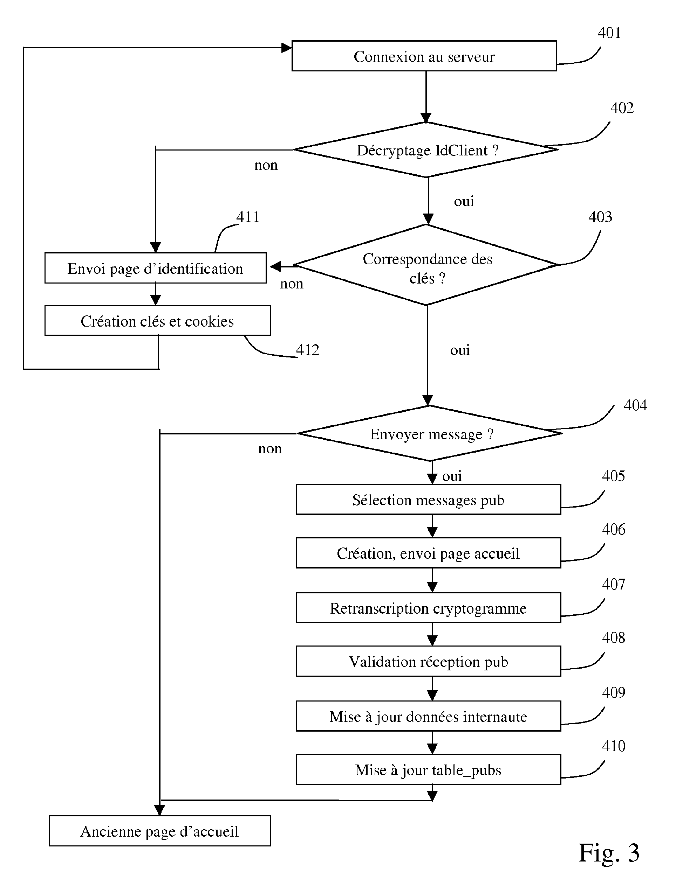

La figure 3 illustre le procédé d'utilisation normale, dite quotidienne, du procédé par l'utilisateur.

Au cours d'une opération 401 l'utilisateur 1 ouvre son navigateur Internet, lequel recherche alors la page de démarrage personnalisée P_{dip}, dont l'adresse Internet URLip a été définie comme adresse de démarrage par défaut. L'ordinateur 100 de l'utilisateur 1 envoie donc une requête au serveur 200 d'adressage de la page d'accueil personnalisée P_{dip}.

Simultanément, le navigateur Internet de l'ordinateur 100 de l'utilisateur 1 envoie au serveur 200 le fichier cookie_clé contenant l'identifiant unique de l'utilisateur IdClient crypté, et la clé publique de l'utilisateur 1.

Au cours d'une opération 402 le serveur 200 décrypte l'identifiant unique IdClient de l'utilisateur 1, contenu dans le fichier cookie_clé de l'utilisateur 1 en utilisant la clé publique de l'utilisateur, cet identifiant unique ayant auparavant, comme on l'a vu en étape 313, été crypté avec la clé privée. Le serveur 200 valide ainsi la clé publique de l'utilisateur 1 contenue dans le fichier cookie_clé.

Au cours d'une opération 403 le serveur 200 vérifie que la paire de clés publique et privée correspond bien à l'utilisateur 1 dont l'identifiant unique est IdClient en encryptant avec la clé publique trouvée dans le fichier cookie_clé reçu de l'ordinateur 100 de l'utilisateur 1, puis en décryptant avec la clé privée trouvée dans la table "clés_privées" et correspondant à l'utilisateur identifié par son identifiant unique IdClient, cette table "clés_privées" étant stockée en mémoire sur le serveur 200, les informations contenues dans le fichier cookie_clé. Si cette opération de cryptage / décryptage est réussie, les clés sont valides, et l'ordinateur 100 de l'utilisateur 1 est ainsi authentifié. Cette opération dure quelques secondes.

Au cours d'une opération 404 le serveur 200 vérifie si l'utilisateur a déjà vu une ou plusieurs publicités dans la journée. En effet, l'utilisation est différente selon que l'utilisateur 1, déjà inscrit selon les étapes 301 à 314 décrites précédemment, se connecte pour la première fois de la journée (ou d'une période de temps arbitrairement choisie), ou pour une seconde ou nième fois. Pour cette vérification, le serveur 200 accède à la base "historique_visualisation". Si, pour la date du jour, la table "historique_visualisation" ne contient pas d'éléments visualisés pour l'utilisateur 1 identifié par son identifiant unique IdClient, le serveur 200 considère que l'utilisateur 1 est dans son premier accès Internet de la journée.

Au cours d'une opération 405 le serveur 200 récupère les informations personnelles de l'utilisateur 1 stockées et encryptées dans la table "table_utilisateurs". Le serveur 200 décrypte ces informations à l'aide de la clé privée (on a vu dans l'étape 309 qu'elles étaient cryptées avec la clé publique de l'utilisateur 1) et sélectionne un ou plusieurs messages publicitaires correspondant aux données personnelles de l'utilisateur (âge, situation géographique, centres d'intérêts privés et professionnels ...).

Cette sélection peut être réalisée par un algorithme de calcul de distance des différentes séries d'informations (des publicités dans le présent exemple) référencées dans la table "table_pub" et des goûts personnels de l'utilisateur 1 dans l'espace à n dimensions correspondant aux critères perceptifs Ci. A chaque série d'information correspond un point de cet espace à n dimensions, déterminé par les valeurs correspondant à son identifiant unique IdPub dans la table "table_pubs" et à chaque utilisateur correspond également un point, déterminé par les valeurs correspondant à son identifiant unique IdClient dans la table "table_utilisateurs". Lors de cette sélection, il est possible de refuser les séries d'informations dont la table "historique_visualisation" montre qu'elles ont déjà été affichées pour l'utilisateur 1 dans une période arbitrairement longue, et par exemple le même jour.

Au cours d'une opération 406, le serveur 200 génère alors la page de démarrage personnalisée P_{dip} demandée par le navigateur de l'utilisateur 1. Cette page de démarrage personnalisée P_{dip} comporte l'ensemble des publicités précédemment sélectionnées, sous forme de bandeaux, blocs de texte ou animations diverses, par exemple flux vidéo ou audio, bons de réduction, invitations, codes promotionnels etc., fournies par des annonceurs et dont les adresses sont stockés dans le registre "table_pub". La page d'accueil P_{dip} précitée comportant ces divers éléments s'affiche alors sur l'écran 106 de l'ordinateur 100 de l'utilisateur 1.

Au bas de la page de démarrage personnalisée P_{dip} de l'utilisateur 1 est implanté un cryptogramme visuel, généré par le serveur 200 de manière classique et connue de l'homme de l'art, et que l'utilisateur 1 doit déchiffrer puis retranscrire par frappe au clavier, au cours d'une opération 407. L'utilisateur 1 confirme ainsi le visionnage de la page d'accueil personnalisée P_{dip}, contenant les séries d'informations (publicités) sélectionnées par le serveur 200, et correspondant aux goûts de l'utilisateur 1. Dans la mise en oeuvre préférée, le cryptogramme visuel comprend des éléments faisant partie des séries d'informations transmises, par exemple des mots liés à une campagne publicitaire en cours. Cette utilisation d'éléments associés au contenu sémantique des informations transmises, permet de valider la lecture effective des informations par l'utilisateur 1, et donc d'éviter une simple réponse réflexe.

Dans une variante, le texte retranscrit correspondant au cryptogramme visuel est crypté par l'ordinateur 100 de l'utilisateur 1 avec sa clé publique.

Au cours d'une opération 408, dès validation du cryptogramme visuel par le serveur 200 en comparant le message contenu dans le cryptogramme émis et le texte de ce message retranscrit par l'utilisateur 1 (éventuellement après décryptage avec la clé privée de l'utilisateur 1, stockée dans la table "clés_privées", le serveur 200 redirige le navigateur Internet de l'ordinateur 100 de l'utilisateur 1 vers son ancienne page d'accueil Internet d'adresse URLd.

Au cours d'une opération 409 le serveur 200 enregistre dans la table "historique_visualisation" le fait que l'utilisateur 1, identifié par l'identifiant unique IdClient, a visionné la ou les séries d'informations sélectionnées et transmises dans la page d'accueil personnalisée P_{dip}.

Au cours d'une opération 410 le serveur 200 enregistre dans la table "table_pubs" pour chaque série d'information (publicité) transmise à l'utilisateur 1 et validée par réception correcte du cryptogramme visuel retranscrit, un incrément du nombre de fois ou cette série d'information a été transmise à l'ensemble des utilisateurs depuis une date arbitrairement choisie. On comprend que cette table servira à des opérations ultérieures de facturation des annonceurs selon le nombre de visualisations confirmées.

Dans une variante de l'opération 404, lors de la vérification par le serveur du fait que l'utilisateur a déjà visionné une ou plusieurs publicité(s) dans la journée, si il apparaît que l'utilisateur 1 qui ouvre son navigateur Internet pour la deuxième fois de la journée a effectivement déjà visionné un message publicitaire qu'il a validé en complétant le cryptogramme visuel implanté au bas du message publicitaire visionné, la réaction du serveur 200 à cette information dépend de l'offre souscrite par l'utilisateur 1 .

Si l'utilisateur 1 a adhéré au programme en choisissant de ne visionner qu'un seul message publicitaire par tranche de 24 heures, le serveur 200 redirigera le navigateur Internet de l'ordinateur 100 de l'utilisateur 1 vers son ancienne page d'accueil Internet d'adresse URLd, sans afficher de nouveau message publicitaire. Les étapes 405 à 410 décrites ci-dessus ne sont pas parcourues.

En revanche, si l'utilisateur 1 a adhéré au programme en choisissant de visionner des messages publicitaires à chaque ouverture de son navigateur Internet sans limitation du nombre de message par tranche de 24 heures, les étapes 1 à 10 ci-dessus décrites se dérouleront autant de fois que l'utilisateur ouvrira son navigateur Internet.

Il est classique que les internautes effacent régulièrement les cookies présents sur leur ordinateur, pour éviter les virus et autres attaques. Dans ce cas, sa clé publique et son identifiant unique IdClient sont perdus. Lorsque l'utilisateur 1 se connecte à Internet dans l'étape 401, le serveur 200 ne peut détecter son identifiant unique IdClient et ne peut donc lui adresser de page d'accueil personnalisé P_{dip}.

Le serveur 200 lui envoie alors, dans une étape 411, une page d'identification Pid, comportant des demandes de nom, prénom, adresse, adresse e-mail, coordonnées bancaires. Dés validation de l'identification par comparaison avec des données stockées dans la table "table_utilisateurs", le serveur 200 génère dans une étape 412 une nouvelle paire de clés publique et privée, et adresse à l'ordinateur 100 de l'utilisateur 1 un nouveau fichier "cookie_clé" et un nouveau fichier "cookie-données". Le serveur 200 stocke la clé privée dans la table "clés-privées" de sa mémoire 203.

L'utilisateur 1 peut ensuite accéder à Internet suivant les étapes 401 à 410 de l'hypothèse 1 ci-dessus décrite.

Comme illustré sur la figure 3, après l'étape 410 le serveur 200 redirige le navigateur Internet de l'ordinateur 100 de l'utilisateur 1 vers son ancienne page d'accueil Internet d'adresse URLd.

La procédure est identique à ce qui vient d'être dit dans le cas où le test de correspondance des deux clés (étape 403) échoue, quelle que soit la raison.

Dans une variante de l'étape 407, l'utilisateur 1 affecte à chaque publicité reçue une ou plusieurs notes de qualité ou de pertinence par rapport à ses goûts, cette note étant retransmise vers le serveur 200 en même temps que le texte retranscrit du cryptogramme visuel. Le serveur 200 mémorise les notes associées aux séries d'informations transmises audit utilisateur 1. Dans cette variante, lors de l'accès au service par un autre utilisateur 1 b ayant des préférences perceptives proches de celles de l'utilisateur 1, le serveur 200 peut lui adresser préférentiellement les publicités les mieux notées par l'utilisateur 1.

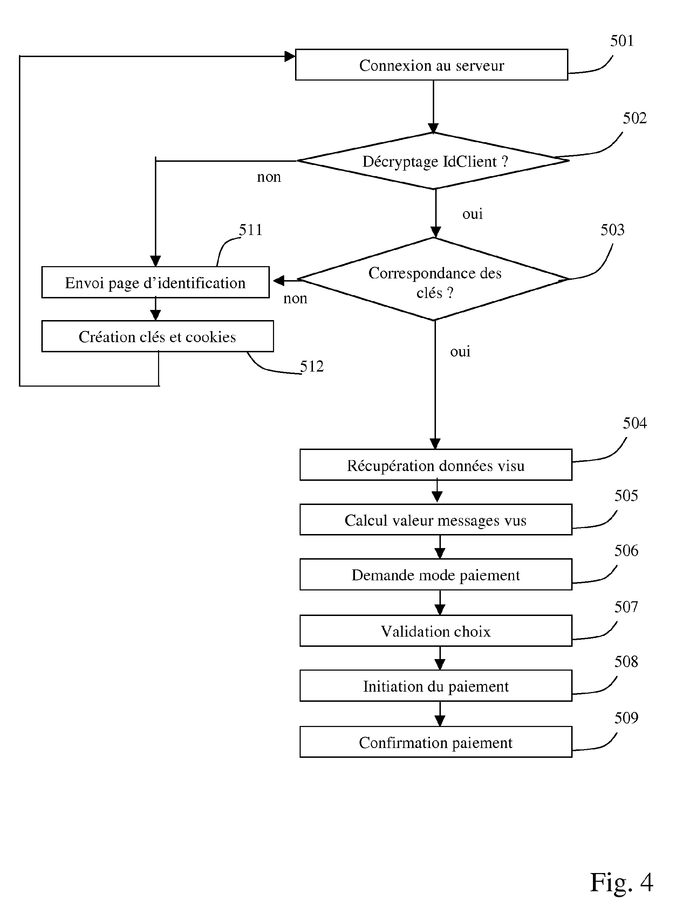

La figure 4 illustre de façon synoptique le procédé de relevé régulier de paramètres du compte utilisateur.

Lorsque l'utilisateur 1 souhaite obtenir paiement des sommes dues à l'utilisateur en contrepartie du ou des messages publicitaires visionnés, au cours d'une opération 501, il se connecte au site Internet site_serveur et demande à obtenir paiement pour le visionnage par ses soins des messages publicitaires ciblés qui lui ont été adressés par le serveur, en cliquant sur un icône correspondant à cette demande.

Au cours d'une opération 502, identique à l'opération 402 ci-dessus, le serveur 200 décrypte l'identifiant unique de l'utilisateur 1 IdClient contenue dans le fichier "cookie_clé" de l'utilisateur avec sa clé publique, et authentifie la clé de l'utilisateur 1 contenue dans le fichier "cookie_clé".

Au cours d'une opération 503, identique à l'opération 403 ci-dessus, le serveur 200 vérifie que la paire de clés publique et privée correspond bien à l'utilisateur 1 en encryptant puis décryptant les informations contenues dans le fichier "cookie_clé".

Au cours d'une opération 504 le serveur 200 récupère dans les tables "historique_visualisations" et "données_comptables" stockées dans sa mémoire 103, des informations correspondant à l'utilisateur 1 identifié par son identifiant unique IdClient, parmi lesquelles figure le nombre de séries d'informations (publicités), visionnées par l'utilisateur 1 depuis une date arbitrairement choisie.

Au cours d'une opération 505, sur la base des informations contenues dans la table "historique_visualisations", le serveur 200 calcule le nombre de messages publicitaires visionnés par l'utilisateur 1 depuis le dernier paiement effectué au profit de l'utilisateur 1, ce dernier paiement et sa date étant stockés dans la table "données_comptables". Le serveur 200 calcule la somme due à l'utilisateur 1 en fonction de la valeur associée à chaque série d'informations visualisée et du nombre de visualisations.

Au cours d'une opération 506 le serveur 200 adresse au navigateur de l'ordinateur 100 de l'utilisateur 1 une page Pₚₐᵢₑ de type classique contenant l'indication de la somme due, une invitation de l'utilisateur à indiquer le moyen de paiement pour lequel il opte (par exemple : par chèque, par virement etc....) et un cryptogramme visuel de validation de sa demande de paiement.

Au cours d'une opération 507 l'utilisateur 1 indique le mode de paiement choisi et valide sa demande de paiement en retranscrivant le cryptogramme visuel inclus dans la page Pₚₐᵢₑ.

Au cours d'une opération 508 le serveur 200 lance un processus de paiement de l'utilisateur 1, selon une procédure automatique ou par message à un service comportant une vérification humaine. Le serveur 200 et met à jour la table "données_comptables" correspondant à l'utilisateur 1.

Au cours d'une opération 509 le serveur 200 confirme alors à l'utilisateur 1 que sa demande de paiement a bien été enregistrée, en lui envoyant une page de remerciement Pᵣₑₘ.

Ici encore, si l'identifiant unique idclient de l'utilisateur n'est pas reconnu, ou si e test de correspondance des clés publique et privée échoue, une procédure identique aux étapes 411 et 412 est lancée.

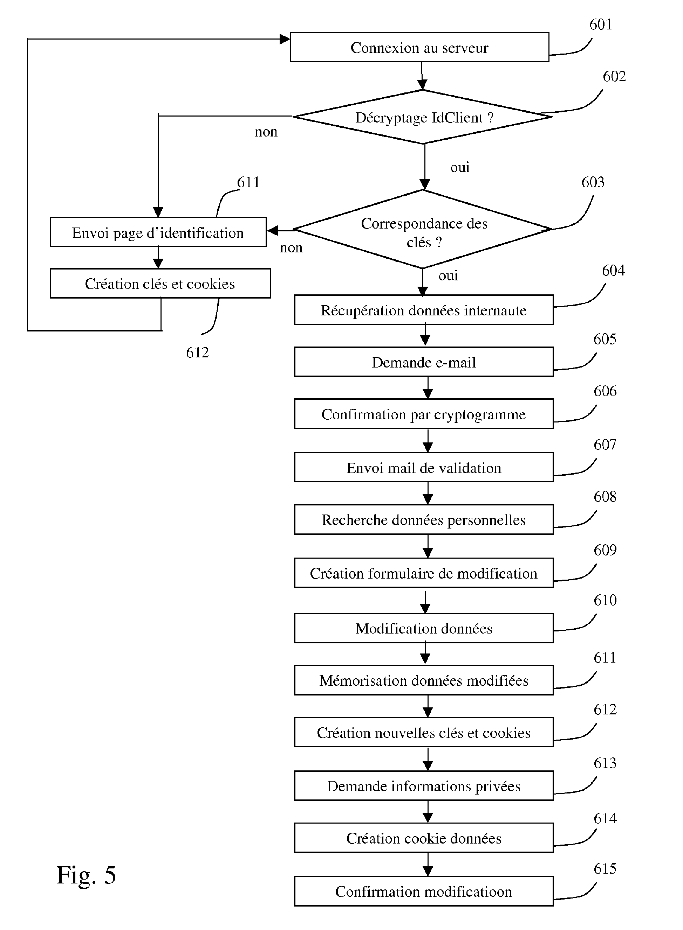

La figure 5 illustre de façon synoptique le procédé de modification de données utilisateur.

Lorsque l'utilisateur 1 souhaite modifier ses données personnelles, au cours d'une opération 601, il se connecte au site Internet site_serveur et demande à « récupérer son compte utilisateur » pour en modifier les données personnelles et privées, en cliquant sur un icône correspondant à cette demande.

Au cours d'une opération 602, identique à l'opération 402 ci-dessus, le serveur 200 décrypte l'identifiant unique IdClient de l'utilisateur 1 contenue dans le fichier "cookie_clé" de l'utilisateur avec sa clé publique, et authentifie la clé de l'utilisateur 1 contenue dans le fichier "cookie_clé".

Au cours d'une opération 603, identique à l'opération 403 ci-dessus, le serveur 200 vérifie que la paire de clés publique et privée correspond bien à l'utilisateur 1 en encryptant puis décryptant les informations contenues dans le fichier "cookie_clé".

Au cours d'une opération 604 le serveur 200 récupère les informations personnelles et privées correspondant à l'utilisateur 1 stockées dans la table "table_utilisateurs" sur le serveur 200.

Au cours d'une opération 605 le serveur 200 redirige le navigateur Internet de l'ordinateur 100 de l'utilisateur 1 vers une page sécurisée Pₘₐᵢₗ contenant un formulaire de saisie d'e-mail ainsi qu'un cryptogramme visuel de validation de sa demande de « récupération de son compte utilisateur ».

Au cours d'une opération 606 l'utilisateur 1 remplit ce formulaire en saisissant une adresse e-mail identique à celle indiquée lors de son inscription au programme et valide le formulaire en retranscrivant le cryptogramme visuel implanté sur ledit formulaire.

Au cours d'une opération 607 le serveur 200 adresse à l'utilisateur 1 un e-mail contenant un lien hypertexte vers une page sécurisée P_{compte} du site qui permet la « récupération de son compte » par l'utilisateur 1. Cette opération est de type classique. L'utilisateur 1 clique sur ce lien hypertexte pour valider la bonne réception du mail.

Au cours d'une opération 608 le serveur 200 va chercher, dans la table "table_utilisateurs" de sa base de données, les données personnelles associées à l'adresse e-mail de l'utilisateur 1 (ou à son identifiant unique IdClient). Dans l'hypothèse où le serveur 200 ne trouverait aucune donnée associée à l'adresse e-mail renseignée par l'utilisateur 1, le serveur 200 redirigerait le navigateur de l'ordinateur 100 de l'utilisateur 1 vers la page d'accueil Pₐ et d'inscription au programme du site Internet site_serveur.

Au cours d'une opération 609 le serveur 200 génère et adresse au navigateur de l'ordinateur 100 de l'utilisateur 1 une page Internet P_{donnees} comportant un formulaire modifiable pré-rempli avec les données personnelles renseignées par l'utilisateur 1 lors de son inscription au programme et stockées par le serveur 200 depuis cette date dans la table "table_utilisateurs". Ce formulaire contient un cryptogramme visuel classique de validation du formulaire.

Au cours d'une opération 610 l'utilisateur 1 modifie comme il le souhaite les informations pré-inscrites dans ce formulaire en fonction des changements intervenus depuis son inscription au programme. Puis, l'utilisateur 1 valide le formulaire modifié via le cryptogramme visuel inclus.

Au cours d'une opération 611 le serveur mémorise les données mises à jour de l'utilisateur 1 dans la table "table_utilisateurs".

Au cours d'une opération 612 le serveur 200 génère une nouvelle paire de clés de cryptage (publique et privée). Il adresse sous forme d'un fichier "cookie_clé" au navigateur de l'ordinateur 100 de l'utilisateur 1 la nouvelle clé publique et le nouvel identifiant unique IdClient de l'utilisateur 1, crypté par la clé privée , stockée sur le serveur 200 dans la table "clés_privées". Le serveur 200 définit alors une nouvelle adresse URLip de page de démarrage Internet personnalisée P_{dip} pour l'utilisateur 1.

Au cours d'une opération 613 le serveur 200 adresse au navigateur de l'utilisateur 1 une page d'informations privées Pᵢₚ comportant un formulaire interactif de demande d'informations privées, cette page étant de type sécurisé. Ce formulaire invite l'utilisateur 1 à fournir des données privées dont notamment :
○ Nom ;
○ Prénoms ;
○ Adresse postale ;
○ Coordonnées bancaires.

Au cours d'une opération 614, l'utilisateur 1 remplit le formulaire et le valide en cliquant sur un icône cible de validation du formulaire. Les données privées contenues dans le formulaire sont encryptées par le serveur 200 en utilisant la clé privée de l'utilisateur 1, puis sont ré-adressées au navigateur Internet de l'ordinateur 100 de l'utilisateur 1 sous la forme d'un cookie, stocké dans un fichier "cookie_données".

Au cours d'une opération 615, le serveur 200 confirme la prise en compte de la demande de modification des données de son compte à l'utilisateur 1 sous la forme d'une page Internet de remerciement Pᵣₑₘ.

Ici encore, si l'identifiant unique idclient de l'utilisateur 1 n'est pas reconnu, ou si e test de correspondance des clés publique et privée échoue, une procédure identique aux étapes 411 et 412 est lancée.

On comprend à la lecture de la description précédente que l'invention permet de répondre au problème des spams publicitaires non ciblés reçus en quantité par les internautes. Ici au contraire, il est créé, par le choix des critères de préférence initiaux, une relation entre l'internaute et les publicités ciblées qu'il accepte de recevoir, et donc les professionnels avec lesquels il est éventuellement mis en relation.

La portée de la présente invention ne se limite pas aux détails des formes de réalisation ci-dessus considérées à titre d'exemple, mais s'étend au contraire aux modifications à la portée de l'homme de l'art.

## Revendications

1. Procédé de transmission d'informations entre un émetteur (200) et un récepteur (100), comportant :
- une phase d'authentification du récepteur (100) utilisant une paire de clés de cryptage de type clé privée / clé publique,
- une phase d'envoi d'une série d'informations de l'émetteur (200) vers le récepteur (100),
- une phase de retransmission par le récepteur (100) vers l'émetteur (200) d'un accusé de réception comportant au moins un élément sémantiquement associé à la série d'informations transmises.

2. Procédé selon la revendication 1, **caractérisé en ce que** l'émetteur est un serveur de fichiers numérisés.

3. Procédé selon l'une quelconque des revendications précédentes, **caractérisé en ce que** l'élément sémantiquement associé à la série d'informations transmises est un texte transmis par l'émetteur sous forme d'image.

4. Procédé selon l'une quelconque des revendications 1 à 3, **caractérisé en ce que** l'élément sémantiquement associé à la série d'informations transmises est une réponse à une question transmise avec la série d'informations, la réponse étant contenue dans la série d'informations transmises.

5. Procédé selon l'une quelconque des revendications précédentes, **caractérisé en ce que** le récepteur est de type ordinateur doté de moyens de visualisation de pages Internet, et **en ce que** la phase d'envoi de la série d'informations utilise un protocole de transmission de type Internet, la série d'informations étant formatée en pages Internet.

6. Procédé selon la revendication 5, **caractérisé en ce que** la clé publique est stockée dans une mémoire de l'ordinateur récepteur, et la clé privée est stockée dans une mémoire du serveur de fichiers.

7. Procédé selon l'une quelconque des revendications précédentes, **caractérisé en ce que** il comporte une phase de mémorisation par l'émetteur des informations transmises à chaque récepteur.

8. Procédé selon la revendication 7 **caractérisé en ce que** l'émetteur comporte une mémoire dans laquelle est stockée une table associant une valeur à chaque série d'informations transmises, et une mémoire associée à chaque récepteur, dans laquelle est stockée la liste des séries d'informations transmises audit récepteur, la date de transmission de chacune de ces séries d'informations, la somme des valeurs associées aux séries d'informations transmises à ce récepteur depuis une date de début de sommation, et la date de début de sommation.

9. Procédé selon la revendication 8, **caractérisé en ce que** l'émetteur comporte une mémoire dans laquelle est stockée un ensemble de données caractéristiques du récepteur, et une mémoire dans laquelle est stockée, pour chaque série d'informations susceptibles d'être transmises, un ensemble de données caractéristiques de cette série.

10. Procédé selon la revendication 9, **caractérisé en ce que** il comporte une phase de sélection d'au moins une série d'informations à transmettre au récepteur selon des critères associant les données caractéristiques du récepteur, les données caractéristiques des séries d'informations susceptibles d'être transmises, et la liste des séries d'informations précédemment transmises audit récepteur.

11. Procédé selon la revendication 10, **caractérisé en ce que** il comporte une phase d'actualisation des données caractéristiques du récepteur.

12. Procédé selon la revendication 11, **caractérisé en ce que** l'actualisation utilise une valorisation par le récepteur de chaque série d'informations reçues, et une mémorisation par l'émetteur des valorisations associées aux séries d'informations transmises audit récepteur.

13. Procédé selon la revendication 5 et l'une quelconque de revendications 6 à 12, **caractérisé en ce que** l'ordinateur récepteur comporte une mémoire dans laquelle sont stockées des informations aptes à provoquer la mise en relation prioritaire avec l'émetteur lors de l'accès du récepteur au réseau Internet.

14. Procédé de transmission d'un ou plusieurs messages publicitaires par un serveur de fichiers vers un ordinateur d'un utilisateur internaute, lesdits messages publicitaires étant formatés au sein d'une page Internet, **caractérisé en ce que** lesdits messages publicitaires sont associés à des évaluations selon n dimensions perceptives, ces évaluations étant stockées dans une mémoire du serveur, et **en ce qu'**il comporte :
- une étape de création de compte dans laquelle :
- l'utilisateur définit ses coordonnées et ses préférences selon les n dimensions perceptives,
- un couple de clés de cryptage de type clés publique et privée est généré, la clé publique étant stockée dans une mémoire de l'ordinateur de l'utilisateur conjointement à un identifiant unique crypté avec la clé privée, et la clé privée est stockée dans une mémoire du serveur conjointement à l'identifiant unique,
- une étape d'utilisation dite quotidienne du service dans laquelle :
- l'ordinateur de l'utilisateur se connecte via Internet au serveur du service et lui adresse son identifiant unique crypté et sa clé publique,
- le serveur décrypte l'identifiant unique avec la clé publique, puis récupère dans sa mémoire la clé privée associée à cet identifiant unique et teste la correspondance des deux clés,
- le serveur sélectionne un ou plusieurs messages publicitaires par proximité aux préférences perceptives de l'utilisateur, puis génère une page Internet comportant ce ou ces messages publicitaires, ainsi qu'un cryptogramme visuel, et l'adresse à l'utilisateur,
- l'utilisateur re-transcrit le contenu du cryptogramme visuel, puis le serveur confirme la correspondance correcte du contenu retranscrit et du contenu originel et stocke en mémoire la visualisation correcte de ce ou ces messages publicitaires par cet utilisateur à la date du jour.

15. Procédé selon la revendication 14, **caractérisé en ce que** le contenu du cryptogramme visuel est un élément sémantique extrait du ou des messages publicitaires transmis.
